# EUROPEAN PATENT APPLICATION

(11) **EP 2 886 236 A1**
(43) Date of publication of application: **24.06.2015**
(21) Application number: 13275320.3
(22) Date of filing: 17.12.2013
(51) Int. Cl.: B23K 9/23, B23K 9/00, B23K 35/00

(54) **Rudder tabs**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The invention relates to a method of connecting metals having dissimilar thermal expansion rates including the steps of pre-heat treating a transition plate along with a first metal, welding the transition plate to the first metal, stress relieving the resulting weld and welding a second metal to the at least one transition plate. More specifically the invention relates to connecting metals together to construct the ships rudder.

## Description

This invention relates to a method of connecting metals together and more specifically to connecting them to construct a ship's rudder.

Before two metals of specific grades are welded to one another, a pre-heating step is used. Pre-heating involves heating the metals to be welded to a predetermined, minimum temperature. This is done to remove any moisture and/or hydrogen from the weld area to prevent delayed hydrogen cracking and to lower the thermal gradient to reduce distortion and residual stress. Stress relieving after welding is another heat treatment which removes internal or residual stresses that may be present from the welding operation. Stress relief after welding reduces the risk of brittle fracture.

Currently, ships' rudders are fabricated by balance welding rudder blades to a rudder stock and then stress relieving once fabrication has been completed. A rudder stock made of a Forging having a higher carbon equivalent to that used for the rudder blades. A preferred Forging rudder stock has a high carbon content which means that it requires pre-heat treatment and, after welding, for stress relieving. Sometimes, rudder blades are manufactured from a metal which is different to that used to make the rudder stock. As the metals are different, the thermal expansion rates will be different which means that it is not possible to apply stress relief to the metals whilst maintaining the resulting rudder within the required tolerance range of 6mm (+- 3mm). It can be very expensive to make a rudder from rudder stock and blades of the same material as a superior quality is needed for the blades compared to the stock.

The present invention describes an improved method of connecting metals having different thermal expansion rates to one another including the steps of: pre-heat treating a transition plate along with a first metal; welding the transition plate to the first metal; stress relieving the resulting weld; and welding a second metal to the transition plate.

The transition plate is preferably welded to the first metal by MIG or MAG welding. The second metal is preferably welded to the transition plate by MIG or MAG welding.

The use of transition plates means that similar or dissimilar metals can be connected to each other with the weld undergoing pre-heat treatment and stress relief without causing stress to the welds by different rates of thermal expansion. This maintains the resulting product within the desired tolerances as no welding needs to be carried out directly on the now stress relieved rudder stock.

In a preferred embodiment the transition plates are made of DH36 steel.

Preferably, the first metal is a forged-steel measuring 100 mm thick and which has high carbon content. The second metal is preferably DH36 steel or Super austenitic Avesta Sheffield 254SMO® which is a stainless steel containing 18% nickel, 20% chromium, 6.1% molybdenum, 0.2% nitrogen and 0.01% carbon. The first metal is used to make a rudder stock and the second metal is used to make a rudder blade insert. 254SMO® is used as it has improved wear and corrosion resistance properties.

The different grades of steel expand and contract at different rates to one another. For example, the expansion rate of Avesta Sheffield 254SMO® is double that of the high-carbon forged steel which can be used for the rudder stock. It is evident that stress relief of the conventional weld joining the blade and the stock will cause the steel components to expand at different rates. However, the present invention overcomes this problem and results in a rudder which is either not distorted or distorted within an acceptable tolerance range.

There is no need to preheat the transition plates and rudder blades. Also, there is no need to stress relieve the weld joining the blade to the transition plate.

The method can be applied to rudder stabilisers or steel fabrication that requires tight tolerances and metals that require stress relieving.

Variants, modifications, additions and omissions relating to the description above are possible within the ambit of the invention and will be readily apparent to the skilled addressee.

## Claims

1. A method of connecting metals having dissimilar thermal expansion rates to one another including the steps of: pre-heat treating a transition plate along with a first metal; welding the transition plate to the first metal; stress relieving the resulting weld; and welding a second metal to the at least one transition plate.

2. A method according to claim 1 wherein the first metal is a high-carbon, forged steel.

3. A method according to claim 1 or claim 2 wherein the second metal is DH36 steel or a stainless steel containing 18% nickel, 20% chromium, 6.1% molybdenum, 0.2% nitrogen and 0.01% carbon.

4. A method according to any preceding claim wherein the first metal is used to make a rudder stock.

5. A method according to claim 3 or claim 4 wherein the second metal is used to manufacture a rudder blade.

6. A rudder manufactured by the method of any preceding claim.
